# EUROPEAN PATENT SPECIFICATION

(11) **EP 4 389 472 B1**
(45) Date of publication and mention of the grant of the patent: **14.10.2026**
(21) Application number: 22216637.3
(22) Date of filing: 23.12.2022
(51) Int. Cl.: B60G 17/017, B60G 17/0165

(54) **FUNCTIONAL SAFETY FOR AN ELECTRICAL VEHICLE IN STATIONARY MODE**
FUNKTIONSSICHERHEIT FÜR EIN ELEKTROFAHRZEUG IM STILLSTAND
SÉCURITÉ FONCTIONNELLE POUR UN VÉHICULE ÉLECTRIQUE EN MODE STATIONNAIRE

(43) Date of publication of application: 26.06.2024
(73) Proprietor: Nio Technology (Anhui) Co., Ltd, Hefei City, Anhui 230601 (CN)
(72) Inventor: ROGERS, David, Hefei City, Anhui 230601 (CN); HUBBARD, Steve, Hefei City, Anhui 230601 (CN); WILKINSON, Jack, Hefei City, Anhui 230601 (CN); FANG, Haiping, Hefei City, Anhui 230601 (CN)
(74) Representative: Vossius & Partner Patentanwälte Rechtsanwälte mbB

(56) References cited:
- EP-B1- 3 166 807
- WO-A1-2021/216368
- CN-A- 110 368 680
- CN-A- 111 959 217
- DE-A1- 102011 108 218
- DE-A1- 102019 214 083
- DE-B4- 102017 111 054
- US-A1- 2017 136 842

## Description

### Technical field

The invention relates to a method for operating an electric vehicle, a computer program product including instructions for carrying out the above method, and an electric vehicle comprising a processor for executing the above computer program.

### Background art

As the automotive industry progresses, improvements in technologies are creating opportunities to create new features for vehicle customers. Some of these features may be activated when the vehicle is in a stationary condition, for example during parking or camping. During camping the vehicle is used as a living space by passengers, for example for sleeping inside the vehicle during overnight travel stops. While parking or camping, a plurality of entertainment functions of the vehicle may be used, for example for playing videos, or films, or music or videogames. These normally involve the use of vehicle devices like video screens, speakers.

One advancement in vehicle technology is the introduction of active suspensions on a vehicle. An active suspension system allows the damper units on a vehicle to apply a force directly between the un-sprung mass and body of a vehicle. One use of the active suspension system is using the force generation to move the car body around with the user in it, to simulate forces on the body in the same manner as a reality simulator. These forces can be used alongside videos or music or gaming, in order to enhance, e.g., the viewing or gaming experience to what is more commonly known as a "4D Experience".

The above-described functions present a plurality of inconveniences. For example, in real life moving the vehicle body through the dampers of the active suspension may create several functional safety issues. For example, people or animal outside of the vehicle could be at risk from the moving vehicle, e.g., trapped under car or in a wheel arch. Applying large body motions to the vehicle through the active suspension could result in the users being injured. An animal or human in the proximity of the vehicle may represent a danger for the passengers inside the vehicle, particular during camping or charging in a public place.

Document CN 110 368 680 A discloses a method for operating a vehicle while the vehicle is stationary. The method comprises determining whether the vehicle is stationary. The method further comprises determining whether at least one passenger is inside the vehicle. The method further comprises determining whether predetermined safety requirements are satisfied. The method further comprises enabling a starting command of a stationary operation function if the vehicle is stationary and if at least one passenger is inside the vehicle. The stationary operation function includes a normal operation procedure and a safety procedure. The method further comprises activating the stationary operation function upon triggering of the starting command by a user of the electric vehicle. The electric vehicle comprises a video and/or sound player. The normal operation procedure includes playing music, video, or a game.

Additionally, document CN 110 368 680 A discloses a vehicle comprising at least one environment sensor for sensing an environment surrounding the vehicle. The vehicle further comprises a processor, a memory, and a computer program product stored on the memory. The computer program product comprises instructions which, when the computer program is executed by the processor, cause the processor to carry out operations. The operations include determining whether the vehicle is stationary. The operations further include determining whether at least one passenger is inside the vehicle. The operations further include determining whether predetermined safety requirements are satisfied. The operations further include enabling a starting command of a stationary operation function if the vehicle is stationary and if at least one passenger is inside the vehicle. The stationary operation function includes a normal operation procedure and a safety procedure. The operations further include activating the stationary operation function upon triggering of the starting command by a user of the vehicle. The vehicle comprises a video and/or sound player. The normal operation procedure includes playing music, video, or a game.

Therefore, there is a need for an improved method for operating an electric vehicle while the electric vehicle is stationary, in particular with reference to above specified safety issues. This object is achieved by the independent claims. Dependent claims refer to preferred embodiments. Additional and/or alternative aspects of the present disclosure are discussed in the specification and in the aspects.

### Summary

According to a first aspect of the invention, a method is provided for operating an electric vehicle. The method comprises:
determining if at least one passenger is inside the electric vehicle,
determining if predetermined safety requirements are satisfied,
enabling a starting command of a stationary operation function if at least one passenger is inside the vehicle, the stationary operation function including a normal operation procedure and a safety procedure,
   activating the stationary operation function upon triggering of the starting command by a user of the electric vehicle.

The safety procedure comprises:
operating at least one environment sensor of the electric vehicle for checking if an entity is present in an environment surrounding the electric vehicle,
modifying at least a part of the normal operation procedure if an entity is detected within a predefined distance from the electric vehicle for a time above a predefined time threshold,

wherein the electric vehicle comprises a video and/or sound player and the normal operation procedure includes playing a music or video or game,
wherein the step of modifying includes modifying the outputs to at least one actuator and not stopping playing a music or video or game.

According to a second aspect of the invention, an electric vehicle is provided that comprises at least one environment sensor for sensing an environment surrounding the electric vehicle, a processor, a memory, and a computer program product stored on the memory and comprising instructions which, when the computer program is executed by the processor, cause the processor to carry out operation, preferably according to the method of the invention, the operation including:
determining if at least one passenger is inside the electric vehicle,
determining if predetermined safety requirements are satisfied,
enabling a starting command of a stationary operation function if at least one passenger is inside the vehicle, the stationary operation function including a normal operation procedure and a safety procedure,
activating the stationary operation function upon triggering of the starting command by a user of the electric vehicle.

The safety procedure comprises:
operating at least one environment sensor of the electric vehicle for checking if an entity is present in an environment surrounding the electric vehicle,
modifying at least a part of the normal operation procedure if an entity having dimensions above a predefined dimension threshold is detected within a predefined distance from the electric vehicle for a time above a predefined time threshold,

wherein the electric vehicle comprises a video and/or sound player and the normal operation procedure includes playing a music or video or game,
wherein the step of modifying includes modifying the outputs to at least one actuator and not stopping playing a music or video or game.

According to a third aspect of the invention, a computer program product comprising instructions which, when the computer program is executed by a computer, cause the computer to carry out the method according to the first aspect in connection with a vehicle according to the second aspect.

The invention is applied to stationary vehicles. For stationary vehicles, the method includes the further step of determining if the electric vehicle is stationary. The starting command of a stationary operation function is enabled if the electric vehicle is stationary and if at least one passenger is inside the electric vehicle, the stationary operation function including a normal operation procedure and a safety procedure.

This invention proposes using the vehicles sensors for sensing an environment surrounding the electric vehicle. The vehicles' environment is monitored, and a control strategy is applied, which improves the functional safety of the stationary functions by controlling at least partially the normal operation procedure. Some of the vehicle functions may be either stopped or reduced based on the vehicle surroundings.

With the term "entity" it is meant any object or individual or animal. With the term "stationary operation function" it is meant any function of the electrical vehicle which is performed while the electric vehicle is stationary, e.g., during parking or camping. Such a definition of "stationary operation function" may include, for example, an entertainment function like a gaming experience or a movie viewing. A stationary condition for operating such a function may be requested for safety reasons, if the attention of the driver is requested or involved during stationary operation function or may be necessary if the stationary operation function involves the use of systems or devices which are also normally used for driving the vehicle when the vehicle is moving.

According to embodiments of the present invention, determining if predetermined safety requirements are satisfied comprises detecting if doors of the electric vehicle are closed and/or checking if the at least one passenger is using a seat belt, and/or checking identity of the at least one passenger. Checking identity of the passengers may be performed, for example, through additional accessory key entry, face recognition, fingerprint, PIN etc. This may be used to allow non driver user (e.g., children) to access the vehicle with safety constraint, e.g., not being able to start/drive the vehicle, but full accessibility to start the stationary features for entertainment.

According to embodiments of the present invention, at least one drive command of the electric vehicle may be used for providing inputs at least during some of the steps or phases of the stationary operation function. Drive commands may include steering wheel, pedals, control buttons, master keys.

According to embodiments of the present invention, the electric vehicle comprises an active suspensions system and at least during some of the steps or phases of the stationary operation function sending outputs are sent to at least one actuator of the active suspensions system for generating forces on the least one passenger, said forces being associated with the music and/or video and/or game and/or inputs from the at least one drive command. The forces generated may provide the passenger inside the vehicle a realistic experience, for example associated with a video game simulating a sportive auto or a plane. During such an experience, the passenger may use the drive commands of the vehicle for providing inputs to the video game, for example rotating the steering wheel for generating a movement in a specific direction inside the video game, while outputs are sent to the active suspension system for generating forces on the passenger that in a real situation corresponding to the video game would be caused by a movement in an analogous direction.

With "normal operation procedure" it is meant any operation, which is normally expected by the passenger when triggering the starting command, for example starting a movie or music or video game. The safety procedure is executed together with normal operation procedure for monitoring an environment surrounding the electric vehicle. This provides an improved level of safety to the passenger(s) inside the vehicle. The normal operation procedure is modified at least partially if an entity is detected within a predefined distance from the electric vehicle for a time above a predefined time threshold. With "normal operation procedure" may, in particular, comprise any operation associated with a camping or charging mode of the vehicle.

The entity may have dimensions above a predefined dimension threshold. It may also be determined whether the entity is moving and, if so, in which direction. The speed of the entity may also be determined. Additionally, or alternatively, particularly but not limited to if an entity is not moving, the predefined distance includes an estimated relative distance. This relates to the relative distance between a stationary, i.e., not moving, entity or a moving entity which may change independently of the entities movement and position depending on the car's movement (even if only a few centimeters) based on the suspension activation. According to embodiments of the invention, for example, the step of modifying at least a part of the normal operation procedure may include stopping sending outputs to at least one actuator only and not stopping playing a music or video or game. Alternatively, the function may be fully stopped. Alternatively, the output to at least one actuator may be modified to reduce the amplitude of the movement of the vehicle. The amplitude may be limited to small oscillation and/or to predefined movements signaling certain information to the passenger. The movement may be used as feedback to be provided to the passenger inside the vehicle that a danger has been detected in a surrounding of the vehicle.

The entity may be stationary, for example when a nearby object in a parking lot is detected, for example a wall or door or lifting barrier. In such cases it may be checked if the entity is within a predefined distance from the electric vehicle. If the stationary entity is detected within a predefined distance from the electric vehicle, the normal operation procedure may be stopped or modified. For example, the movement of the vehicle determined by the active suspensions system may be inhibited or reduced for eliminating potential damage to the detected static object and/or to the vehicle.

The entity may be below a predefined dimension, as it may occur when small flying objects such as leaves are detected. According to embodiments of the invention, it is checked if the small entity is nevertheless dangerous for the vehicle, as it may be the case when detecting a hard object, such as a swinging garage opener chain, which may still harm the vehicle. If a small but potentially dangerous object is detected, the normal operation procedure may be stopped or modified. The movement of the vehicle may be inhibited or reduced for eliminating potential damage or only to provide feedback of the potential danger to the passenger inside the vehicle.

Normal operation procedure can also be inhibited with master key entry or demand.

The environment sensor may be any of a camera or Lidar or ultrasonic sensor or motion sensor.

According to embodiments of the present invention, the safety procedure comprises pausing at least a part of the normal operation procedure if the entity. preferably having dimensions above a predefined dimension threshold, is detected within the predefined distance from the electric vehicle for a time below the predefined time threshold. According to this embodiment the normal operation procedure is paused and again resumed if the detected entity remains in proximity of the vehicle for a small time, below the predefined time threshold. With "pausing" it is meant temporally inhibiting the normal operation procedure, which is afterwards automatically resumed. With "stopping" it is meant a full stop of the normal operation procedure, which requires intervention from the user for being again activated again, e.g., by triggering again the starting command.

A first condition for enabling the starting command is that the vehicle is stationary. According to embodiments of the invention, this may be identified by checking that a speed of the electric vehicle is zero and/or checking that the park brake is engaged. A second condition for enabling the starting command is that at least one passenger is inside the electric vehicle. For safety reasons, it may be necessary that the passenger is correctly seated. This may be the case, for example, when the active suspensions system generates forces, which may cause injures to the passenger. To such purpose, in embodiments of the present invention, the electric vehicle may comprise one or more seating sensors, for example weight sensors inside the vehicle seats or (a) camera(s) for checking that the passenger occupies a seat of the electric vehicle. In addition, it may be required that the seatbelt of the occupied seat is fastened.

According to the present invention, with the term "passenger" it is meant any individual inside the vehicle for being subject to the stationary operation function, i.e., for example for seeing a movie or playing a video game. The passenger may be distinguished from the "user", who, according to the present invention, may be an individual capable of triggering the starting command, for example while being outside the vehicle. Passenger and user may be the same individual, for example the starting command may be triggered by the passenger while seating inside the electric vehicle. Passenger and user may be different individuals, for example the passenger may be a partner, friend or child of the user, or any third person.

According to embodiments of the present invention, the electric vehicle may comprise one visual and/or acoustic output means wherein the method comprises providing a visual or acoustic feedback that the stationary operation function is active. The visual or acoustic feedback may internal or external with respect to the vehicle.

According to embodiments of the present invention, the safety procedure may comprise providing a visual or acoustic warning after stopping the stationary operation function. Such a warning may advantageously provide the passenger inside the vehicle with a warning that an individual is present in the surrounding of the vehicle and, for example, that a breaching access to the vehicle could potentially occur. This may be particular advantageous during camping or charging.

The invention has been described in terms of different embodiments. It is to be understood that one or more features of any one embodiment may be combinable with one or more features of the other embodiments. In addition, any single feature or combination of features in any of the embodiments may constitute additional embodiments.

### Brief description of the drawings

The subject-matter of the disclosure will be explained in more detail with reference to preferred exemplary embodiments which are illustrated in the attached drawings, in which:
Fig. 1 shows a schematic top view of an electrical vehicle,
Fig. 2 shows a schematic block-diagram of a method for operating an electrical vehicle while the electrical vehicle is stationary,
Fig. 3 shows a schematic block-diagram illustrating steps of the method of Fig. 2, and
Fig. 4 shows another schematic block-diagram illustrating other steps of the method of Fig. 2.

### Detailed description of embodiments

In the figures, like elements are denoted with the same reference numerals unless otherwise indicated.

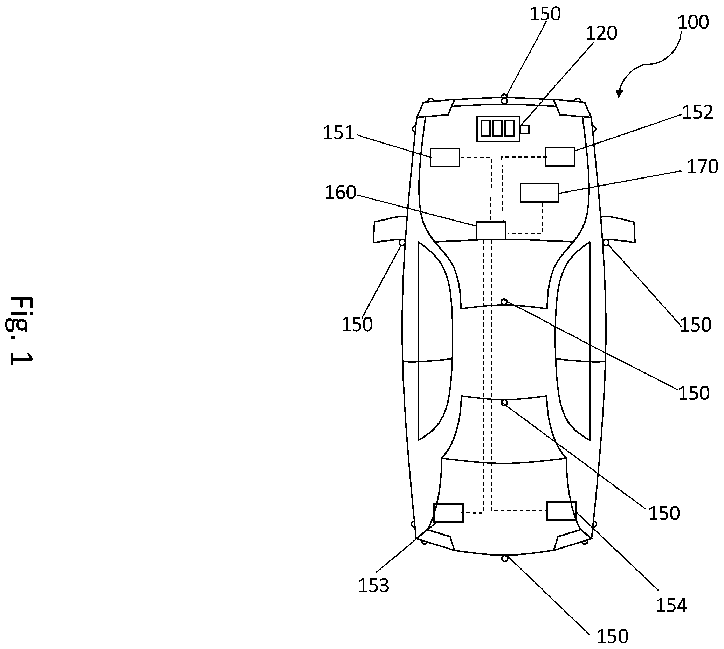

Fig. 1 schematically shows an electric vehicle 100 comprising one or more electrical battery 120 and a plurality of environment sensors 150 for sensing an environment surrounding the electric vehicle 100. Any of the environment sensors 150 may be a camera or Lidar or ultrasonic sensor or motion sensor. The electric vehicle 100 comprises a video and/or sound player (not shown in Fig. 1). The electric vehicle 100 further comprises an active suspensions system having a plurality of actuators, for example four damper units 151, 152, 153, 154, for applying respective forces between the sprung and un-sprung masses of the electric vehicle 100. The four damper units 151, 152, 153, 154 are respectively provided at the front left, front right, rear left and rear right wheel. The electric vehicle 100 comprises a plurality of seats (not shown) and at least one seating sensor (not shown) for each seat for sensing if the at least one passenger occupies a seat of the electric vehicle 100. The seating sensor may be for example provided in the form of a weight sensor and/or a camera. The electric vehicle 100 further comprises a park brake or electrical park brake (not shown).

The electric vehicle 100 further comprises a processor 160 and a memory 170 connected to each other. The processor 160 is connected to the environment sensors 150 for receiving signals providing data about environment surrounding the electric vehicle 100 (the connection between the processor 160 and the environment sensors 150 is not shown in Fig. 1). The processor 160 is further connected to the damper units 151, 152, 153, 154 for sending actuation signal to the damper units 151, 152, 153, 154. The environment sensors 150, damper units 151, 152, 153, 154, the seating sensors, processor 160 and a memory 170 may be powered by the electrical battery 120. A computer program product is stored on the memory 170 and comprises instructions which, when the computer program is executed by the processor 160 cause the processor to carry out operation of a method for operating the electric vehicle 100 while the electric vehicle 100 is stationary. Such method will be described in detail in the following.

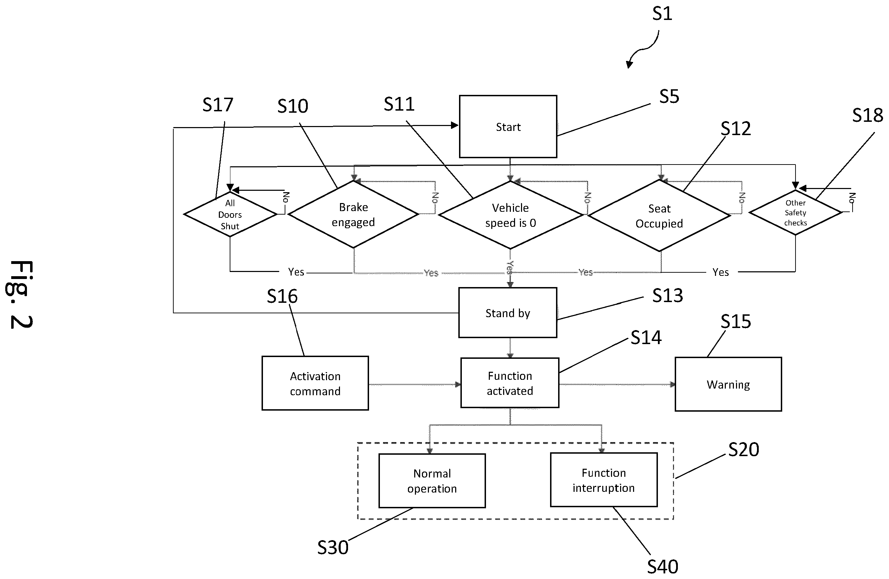

Fig. 2 schematically shows a method S1 for operating an electric vehicle 100. The method S1 is operated while the electric vehicle 100 is stationary. The method S1 comprises a first step S5 of starting the method S1. The first step S5 may be performed when the electric vehicle 100 is switched on by a user, so that power is provided from the battery 120 to the components of the electric vehicle 100. After the first step S5 of starting, the method comprises a second steps S10 and a third step S11 for determining if the electric vehicle 100 is stationary and a fourth step S12 of determining if at least one passenger is inside the electric vehicle 100. The second step S10 is a check step for checking if the park is engaged. The third step S11 is a further check step for checking if the speed of the electric vehicle 100 is zero. The fourth step S12 is a further check step for checking if at least one passenger is inside the electric vehicle 100. The fourth step S12 may further comprise checking if the at least one passenger occupies a seat of the electric vehicle 100. The fourth step S12 may be performed through seating sensors of the electric vehicle 100, such as a weight sensor or a camera. A plurality of further additional and/or alternative steps S17 and S18 may be performed to check that one or more predetermined safety requirements are met. For example, a further fifth step S17 may comprise checking whether the doors of the electric vehicle 100 are closed. A further sixth step S18 may comprise checking whether other safety requirements are met, for example if one or more passenger, which are present inside the vehicle 100, are correctly using a seat belt. The sixth step S18 may further comprise checking identity of the passenger(s). This may include, for example, receiving information through additional accessory key entry, face recognition, fingerprint, PIN etc. This may be used to allow non driver user (e.g., children) to access the vehicle with safety constraint, e.g., not being able to start/drive the vehicle, but full or modified accessibility to start the stationary features for entertaining. If the checks in the steps S11, S12, S13, S17 and/or S18 are positive, i.e., the electric vehicle 100 is stationary, at least one passenger is inside the electric vehicle 100 and the other predetermined safety requirements are satisfied, then the method S1 continues with a seventh step S13 of enabling a starting command of a stationary operation function S20. In an eight step S16 of the method S1 a user, for example the passenger inside the vehicle 100, triggers the starting command. Upon triggering S16 of the starting command, a ninth step S14 of the method S1 is performed, in which the stationary operation function 20 is activated. The stationary operation function S20 is a function of the electrical vehicle 100 which is to be performed while the electric vehicle 100 is stationary, e.g., during parking or camping or charging. The stationary operation function S20 may include, for example, an entertainment function like a gaming experience or a movie viewing. The stationary operation function S20 includes a normal operation procedure S30 and a safety procedure S40. Both the normal operation procedure S30 and the safety procedure S40 include a plurality of sub-steps, as detailed in the following. Optionally, the method S1 may comprise a further tenth step S15 of providing a visual and/or acoustic feedback that the stationary operation function is active. Such feedback may be provided through a visual and/or acoustic device inside and/or outside the electric vehicle 100.

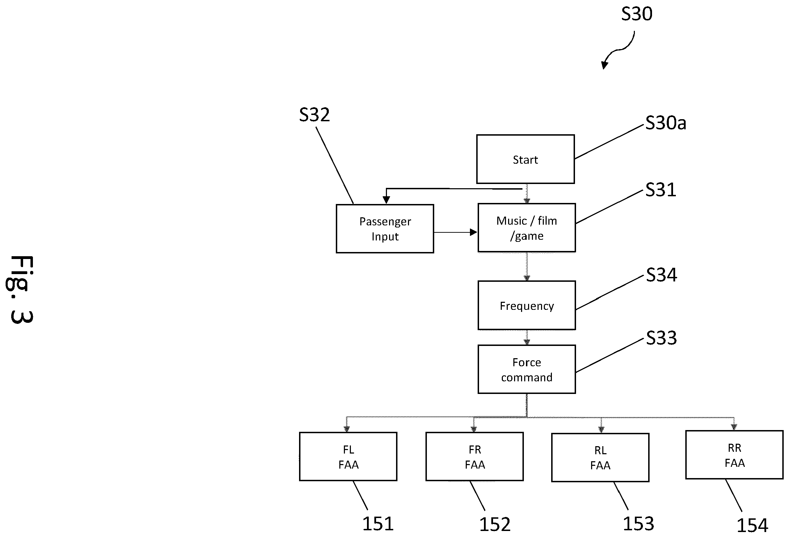

Fig. 3 schematically shows an embodiment of the normal operation procedure S30. In such embodiment the normal operation procedure S30 corresponds to a so called "4D experience", during which a movie and/or music and/or video game is played and the active suspension system 151, 152, 153, 154 is activated to move the body of the vehicle 100 to generate forces on the passenger. The forces are coordinated with movie and/or music and/or video game, in order to simulate a real experience. In other words, the stationary electric vehicle 100 is used as a reality simulator. According to other embodiments, the normal operation procedure S30 may include another procedure which is to be performed while the electric vehicle is stationary, for example during parking or camping or charging.

In a first sub-step S30a, the normal operation procedure S30 is started. This may occur when, in the sixth step S16 of the method S1, a user triggers the starting command. In a following second sub-step S31 of the normal operation procedure S30. e.g., a movie and/or music and/or videogame is played by means of a video and/or sound player included in the electric vehicle 100. In a parallelly executed third sub-step S32 of the normal operation procedure S30, the passenger may provide inputs to the video and/or sound player to interreact with the movie and/or music and/or videogame. To such purpose drive commands, for example steering wheel, pedals, control buttons, of the electric vehicle may be used. Sound and movie/videogames tracks are sampled and converted as frequency signals in a fourth sub-step S34 of the normal operation procedure S30. The sample rate may be, for example, 100 ms. In a fifth sub-step S33 of the normal operation procedure S30, the frequency signals from the fourth sub-step S34 are converted into demand distance and/or time travel for each damper unit 151, 152, 153, 154 of the active suspensions system. The active suspensions system so commanded for generating forces on the passenger, the forces being associated with the music or video or game or inputs from the passenger.

The above described normal operation procedure S30 may generate a plurality of safety issues, for example connected with the movement of the electric vehicle 100 generated by the damper unit 151, 152, 153, 154 of the active suspensions system or with the lack of attention of the passenger towards the environment surrounding the damper unit 151, 152, 153, 154 of the active suspensions system, while the passenger is concentrated on the sound, images and forces provided by the the normal operation procedure S30. These safety issues are managed by the safety procedure S40, which is executed together with the normal operation procedure S30 for monitoring the environment surrounding the electric vehicle. This provides an improved level of safety to the passenger(s) inside the vehicle.

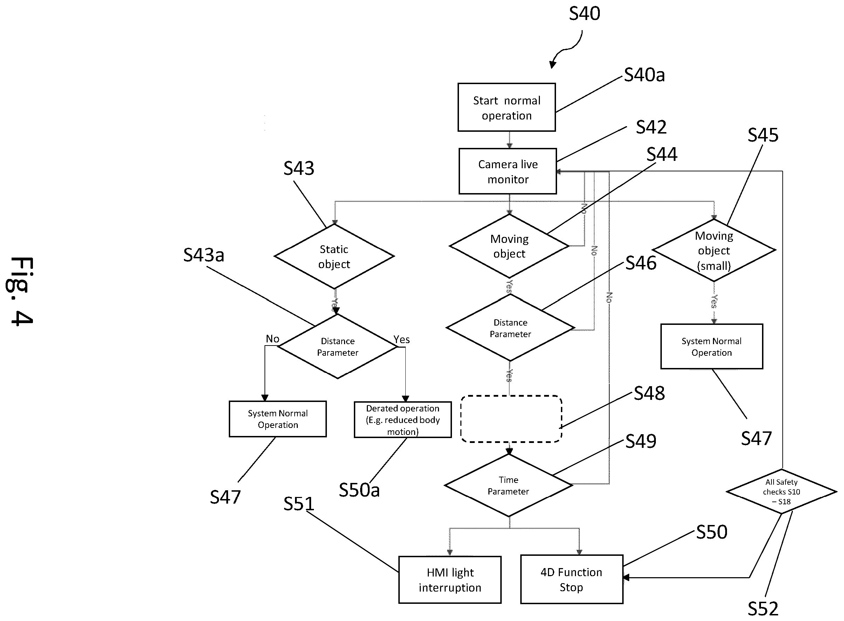

Fig. 4 schematically shows an embodiment of the safety procedure S40. In a first sub-step S40a, the the safety procedure S40 is started. This may occur when, in the sixth step S16 of the method S1, a user triggers the starting command. In a following second sub-step S42 of the safety procedure S40, at least one environment sensor 150 of the electric vehicle 100 is operated for checking if an entity is present in an environment surrounding the electric vehicle 100. The entity may be an object or person or animal. If an entity is detected by one environment sensor 150, which may or may not be a camera, a plurality of checks is performed. In a third sub-step S43 it is checked if the entity is a static object, as it may occur when a nearby object in a parking lot is detected. If the check in the third sub-step S43 is positive, then a fourth sub-step S43a is performed for measuring a distance between the detected entity and the electric vehicle 100 and checking if the entity is detected within a predefined distance from the electric vehicle 100. If the entity is detected beyond a predefined distance from the electric vehicle 100, then a fifth sub-step S47 is performed, in which the normal operation procedure S30 is further operated without intervention from the safety procedure S40. If the entity is detected within a predefined distance from the electric vehicle 100, then a sixth sub-step S50a is performed, in which the normal operation procedure S30 is modified. For example, in the sixth sub-step S50a, the movement of the vehicle may be inhibited or reduced for eliminating potential damage to the detected static object or to the vehicle. In a seventh sub-step S45 it is checked if the entity is below a predefined dimension, as it may occur when small flying objects such as leaves are detected. If the check in the fourth sub-step S45 is positive, then the fifth sub-step S47 is performed, in which the normal operation procedure S30 is further operated without intervention from the safety procedure S40. In another embodiment of the invention, the seventh sub-step S45 further comprise checking if the small entity is nevertheless dangerous for the vehicle 100, as it may be the case when detecting a hard object, such as a swinging garage opener chain, which may still harm the vehicle 100. If a small but potentially dangerous object is detected, then the sixth sub-step S50a is performed, in which the normal operation procedure S30 is modified. The movement of the vehicle may be inhibited or reduced for eliminating potential damage or only to provide feedback of the potential danger to the passenger inside the vehicle. Checking if the small entity is nevertheless dangerous for the vehicle 100 may include measuring a speed of the entity. In a seventh sub-step S44 it is checked if the entity is above a predefined dimension and if the entity is moving, as it may occur when persons or animals are detected. If the check in the seventh sub-step S44 is positive, then an eight check sub-step S46 is performed for measuring a distance between the detected entity and the electric vehicle 100. If the entity is detected within a predefined distance from the electric vehicle 100 the safety procedure S40 may comprises a ninth sub-step S48 of pausing at least a part of the normal operation procedure S30. The ninth sub-step S48 is optional and may be not executed in other embodiments of the safety procedure S40. In a further tenth sub-step S49 it is checked if the detected entity remains within the predefined distance from the electric vehicle 100 for a time below a predefined time threshold. The predefined time threshold could be, for example, comprised between 0,1 s and 10 s. Particularly, the predefined time threshold could be 2 s. If the check in the tenth sub-step S49 is negative, then the normal operation procedure S30 is further operated or resumed, if it was previously stopped in the sixth sub-step S48. If the check in the seventh sub-step S49 is positive, then an eleventh sub-step S50 of the safety procedure S40 is executed, in which at least a part of the normal operation procedure S30 is modified. The eleventh sub-step S50 may include stopping the fifth sub-step S33 of the normal operation procedure S30, i.e., stopping sending outputs to the actuators 151, 152, 153, 154, without stopping the second sub-step S31 of the normal operation procedure S30, which means that a movie and/or music and/or videogame may be still played after the eleventh sub-step S50 of the safety procedure S40 has been executed. The stop may be permanent and require an intervention from the passenger/user for being resumed. The safety procedure S40 may provide an optional twelfth sub-step S51 providing a visual or acoustic warning after stopping the stationary operation function S20. Such warning may be provided through a visual or acoustic device inside the electric vehicle 100. Such a warning may advantageously provide the passenger inside the vehicle with a warning that an individual is present in the surrounding of the vehicle and, for example, that a breaching access to the vehicle could potentially occur. This may be particular advantageous during situations the user is in the vehicle and not aware of the surroundings, i.e., camping, or sleeping. The system operation S40 includes a thirteenth sub-step S52 of continuously performing the checks of the steps S11, S12, S13, S17 and/or S18 are, i.e., if the electric vehicle 100 is stationary, at least one passenger is inside the electric vehicle 100 and the other predetermined safety requirements are satisfied. If any of the checks of the steps S11, S12, S13, S17 or S18 is negative, then the eleventh sub-step S50 of the safety procedure S40 is executed. For example, the normal operation procedure S30 may be stopped until full safety check is confirmed again to resume as user demands.

Substeps S43, S44, S45 and the following routines may be performed subsequently and/or in parallel to one another.

## Claims

1. A method (S1) for operating an electric vehicle (100) while the electric vehicle (100) is stationary, the method (S1) comprising:
determining (S10, S11) if the electric vehicle (100) is stationary,
determining (S12) if at least one passenger is inside the electric vehicle (100),
determining (S17, S18) if predetermined safety requirements are satisfied,
and enabling (S13) a starting command of a stationary operation function (S20) if the electric vehicle (100) is stationary and if at least one passenger is inside the electric vehicle (100), the stationary operation function (S20) including a normal operation procedure (S30) and a safety procedure (S40),
activating (S14) the stationary operation function (S20) upon triggering (S16) of the starting command by a user of the electric vehicle (100),
wherein the safety procedure (S40) comprises:
operating (S42) at least one environment sensor (150) of the electric vehicle (100) for checking if an entity is present in an environment surrounding the electric vehicle (100),
modifying (S50, S50a) at least a part of the normal operation procedure (S30) if an entity is detected within a predefined distance from the electric vehicle (100) for a time above a predefined time threshold,
wherein the electric vehicle (100) comprises a video and/or sound player and the normal operation procedure (S30) includes playing (S31) a music or video or game,
wherein the step of modifying (S50) includes modifying the outputs (S33) to at least one actuator (151, 152, 153, 154) and not stopping playing (S31) a music or video or game.

2. The method according to claim 1, wherein determining (S17, S18) if predetermined safety requirements are satisfied comprise detecting if doors of the electric vehicle (100) are closed and/or checking if the at least one passenger is using a seat belt, and/or checking identity of the at least one passenger.

3. The method according to claim 1 or 2, wherein at least a part of the normal operation procedure (S30) is modified if an entity is detected having dimensions above a predefined dimension threshold.

4. The method (S1) according to any of the previous claims, wherein the safety procedure (S40) comprises pausing (S48) at least a part of the normal operation procedure (S30) if the entity having dimensions above a predefined dimension threshold is detected within the predefined distance from the electric vehicle (100) and resuming said part of the normal operation procedure (S30) if the entity is detected for a time below the predefined time threshold.

5. The method (S1) according to any of the previous claims, wherein the normal operation procedure (S30) includes receiving inputs (S32) from at least one drive command of the electric vehicle (100).

6. The method (S1) according to any of the previous any one of claims 1 to 5, wherein the electric vehicle (100) comprises an active suspensions system and the normal operation procedure (S30) includes sending outputs (S33) to at least one actuator (151, 152, 153, 154) of the active suspensions system for generating forces on at least one passenger, said forces being associated with the music and/or video and/or game or inputs from the at least one drive command.

7. The method (S1) according to any of the previous claims, wherein the method comprises providing (S15) a visual and/or acoustic feedback that the stationary operation function is active and/or to convey information such as warnings to the user passenger.

8. The method (S1) according to any of the previous claims, wherein the safety procedure (S40) comprises providing (S51) a visual and/or acoustic warning after stopping (S50) the stationary operation function (S20).

9. An electric vehicle (100) comprising at least one environment sensor (150) for sensing an environment surrounding the electric vehicle (100), a processor, a memory, and a computer program product stored on the memory and comprising instructions which, when the computer program is executed by the processor, cause the processor to carry out operations, preferably operations according to the method of any one of claims 1 to 7, the operations including:
determining (S10, S11) if the electric vehicle (100) is stationary,
determining (S12) if at least one passenger is inside the electric vehicle (100),
determining (S17, S18) if predetermined safety requirements are satisfied,
enabling (S13) a starting command of a stationary operation function (S20) if the electric vehicle (100) is stationary and if at least one passenger is inside the electric vehicle (100), the stationary operation function (S20) including a normal operation procedure (S30) and a safety procedure (S40),
activating (S14) the stationary operation function (S20) upon triggering (S16) of the starting command by a user of the electric vehicle (100),
wherein the safety procedure (S40) comprises:
operating (S42) the at least one environment sensor (150) of the electric vehicle (100) for checking if an entity is present in an environment surrounding the electric vehicle (100),
modifying (S50, S50a) at least a part of the normal operation procedure (S30) if an entity is detected within a predefined distance from the electric vehicle (100) for a time above a predefined time threshold
wherein the electric vehicle (100) comprises a video and/or sound player and the normal operation procedure (S30) includes playing (S31) a music or video or game,
wherein the step of modifying (S50) includes modifying the outputs (S33) to at least one actuator (151, 152, 153, 154) and not stopping playing (S31) a music or video or game.

10. An electric vehicle (100) according to claim 9, wherein the at least one environment sensor (150) is any of a camera or Lidar or ultrasonic sensor or motion sensor.

11. An electric vehicle (100) according to claim 9, further comprising a video and/or sound player and/or a vehicle interface for gaming and the normal operation procedure (S30) includes playing (S31) a music and/or video or game.

12. An electric vehicle (100) according to claim 10, wherein the electric vehicle (100) comprises an active suspensions system and the normal operation procedure (S30) includes sending outputs (S33) to at least one actuator (151, 152, 153, 154) of the active suspensions system for generating forces on the least one passenger, said forces being associated with the music and/or video or game and/or inputs from the at least one drive command.

13. A computer program product comprising instructions which, when the computer program is executed by a computer, cause the computer to carry out the method according to one of claims 1 to 8 in connection with a vehicle according to any of claims 9 to 12.

## Patentansprüche

1. Verfahren (S1) zum Betreiben eines elektrischen Fahrzeugs (100), während das elektrische Fahrzeug (100) stationär ist, wobei das Verfahren (S1) Folgendes umfasst:
Bestimmen (S10, S11), ob das elektrische Fahrzeug (100) stationär ist,
Bestimmen (S12), ob sich mindestens ein Insasse innerhalb des elektrischen Fahrzeugs befindet (100),
Bestimmen (S17, S18), ob vorbestimmte Sicherheitsanforderungen erfüllt sind,
und Aktivieren (S13) eines Startbefehls einer stationären Betriebsfunktion (S20), wenn das elektrische Fahrzeug (100) stationär ist und sich mindestens ein Insasse innerhalb des elektrischen Fahrzeugs (100) befindet, wobei die stationäre Betriebsfunktion (S20) eine Normalbetriebsarbeitsweise (S30) und eine Sicherheitsarbeitsweise (S40) beinhaltet,
Aktivieren (S14) der stationären Betriebsfunktion (S20) nach Auslösen (S16) des Startbefehls durch einen Benutzer des elektrischen Fahrzeugs (100),
wobei die Sicherheitsarbeitsweise (S40) Folgendes umfasst:
Betreiben (S42) mindestens eines Umgebungssensors (150) des elektrischen Fahrzeugs (100) zum Prüfen, ob eine Entität in einer Umgebung vorhanden ist, die das elektrische Fahrzeug (100) umgibt,
Modifizieren (S50, S50a) mindestens eines Teils der Normalbetriebsarbeitsweise (S30), falls für eine Zeit über einer vordefinierten Zeitschwelle eine Entität innerhalb eines vordefinierten Abstands von dem elektrischen Fahrzeug (100) detektiert wird,
wobei das elektrische Fahrzeug (100) einen Video- und/oder Tonabspieler umfasst und die Normalbetriebsarbeitsweise (S30) das Abspielen (S31) einer Musik oder eines Videos oder eines Spiels beinhaltet,
wobei der Schritt des Modifizierens (S50) das Modifizieren der Ausgaben (S33) an mindestens einen Aktuator (151,152,153,154) und das Nicht-Stoppen des Abspielens (S31) einer Musik oder eines Videos oder eines Spiels beinhaltet.

2. Verfahren nach Anspruch 1, wobei das Bestimmen (S17, S18), ob vorbestimmte Sicherheitsanforderungen erfüllt sind, ein Detektieren, ob Türen des elektrischen Fahrzeugs (100) geschlossen sind, und/oder ein Prüfen, ob der mindestens eine Insasse einen Sicherheitsgurt verwendet, und/oder ein Prüfen der Identität des mindestens einen Insassen umfasst.

3. Verfahren nach Anspruch 1 oder 2, wobei mindestens ein Teil der Normalbetriebsarbeitsweise (S30) modifiziert wird, wenn eine Entität detektiert wird, die Abmessungen oberhalb einer vordefinierten Abmessungsschwelle aufweist.

4. Verfahren (S1) nach einem der vorhergehenden Ansprüche, wobei die Sicherheitsarbeitsweise (S40) ein Pausieren (S48) mindestens eines Teils der Normalbetriebsarbeitsweise (S30) umfasst, falls die Entität mit Abmessungen über einer vordefinierten Abmessungsschwelle innerhalb des vordefinierten Abstands von dem elektrischen Fahrzeug (100) detektiert wird, und ein Wiederaufnehmen des Teils der Normalbetriebsarbeitsweise (S30), falls die Entität für eine Zeit unterhalb der vordefinierten Zeitschwelle detektiert wird.

5. Verfahren (S1) nach einem der vorhergehenden Ansprüche, wobei die Normalbetriebsarbeitsweise (S30) ein Empfangen von Eingaben (S32) von mindestens einem Antriebsbefehl des elektrischen Fahrzeugs (100) beinhaltet.

6. Verfahren (S1) nach einem der vorhergehenden Ansprüche 1 bis 5, wobei das elektrische Fahrzeug (100) ein aktives Aufhängungssystem umfasst und die Normalbetriebsarbeitsweise (S30) ein Senden von Ausgaben (S33) an mindestens einen Aktuator (151, 152, 153, 154) des aktiven Aufhängungssystems zum Erzeugen von Kräften auf mindestens einen Insassen beinhaltet, wobei die Kräfte mit der Musik und/oder dem Video und/oder dem Spiel oder Eingaben von dem mindestens einen Antriebsbefehl assoziiert sind.

7. Verfahren (S1) nach einem der vorhergehenden Ansprüche, wobei das Verfahren ein Bereitstellen (S15) einer visuellen und/oder akustischen Rückmeldung, dass die stationäre Betriebsfunktion aktiv ist und/oder zum Übermitteln von Informationen, wie etwa Warnungen, an den Benutzerinsassen umfasst.

8. Verfahren (S1) nach einem der vorhergehenden Ansprüche, wobei die Sicherheitsarbeitsweise (S40) ein Bereitstellen (S51) einer visuellen und/oder akustischen Warnung nach dem Stoppen (S50) der stationären Betriebsfunktion (S20) umfasst.

9. Elektrisches Fahrzeug (100), das mindestens einen Umgebungssensor (150) zum Erfassen einer Umgebung, die das elektrische Fahrzeug (100) umgibt, einen Prozessor, einen Speicher und ein Computerprogrammprodukt umfasst, das in dem Speicher gespeichert ist und Anweisungen umfasst, die, wenn das Computerprogramm durch den Prozessor ausgeführt wird, den Prozessor veranlassen, Operationen, vorzugsweise Operationen gemäß dem Verfahren nach einem der Ansprüche 1 bis 7, auszuführen, wobei die Operationen Folgendes beinhalten:
Bestimmen (S10, S11), ob das elektrische Fahrzeug (100) stationär ist,
Bestimmen (S12), ob sich mindestens ein Insasse innerhalb des elektrischen Fahrzeugs befindet (100),
Bestimmen (S17, S18), ob vorbestimmte Sicherheitsanforderungen erfüllt sind,
Aktivieren (S13) eines Startbefehls einer stationären Betriebsfunktion (S20), wenn das elektrische Fahrzeug (100) stationär ist und sich mindestens ein Insasse innerhalb des elektrischen Fahrzeugs (100) befindet, wobei die stationäre Betriebsfunktion (S20) eine Normalbetriebsarbeitsweise (S30) und eine Sicherheitsarbeitsweise (S40) beinhaltet,
Aktivieren (S14) der stationären Betriebsfunktion (S20) nach Auslösen (S16) des Startbefehls durch einen Benutzer des elektrischen Fahrzeugs (100),
wobei die Sicherheitsarbeitsweise (S40) Folgendes umfasst:
Betreiben (S42) des mindestens einen Umgebungssensors (150) des elektrischen Fahrzeugs (100) zum Prüfen, ob eine Entität in einer Umgebung vorhanden ist, die das elektrische Fahrzeug (100) umgibt,
Modifizieren (S50, S50a) mindestens eines Teils der Normalbetriebsarbeitsweise (S30), falls für eine Zeit über einer vordefinierten Zeitschwelle eine Entität innerhalb eines vordefinierten Abstands von dem elektrischen Fahrzeug (100) detektiert wird,
wobei das elektrische Fahrzeug (100) einen Video- und/oder Tonabspieler umfasst und die Normalbetriebsarbeitsweise (S30) das Abspielen (S31) einer Musik oder eines Videos oder eines Spiels beinhaltet,
wobei der Schritt des Modifizierens (S50) das Modifizieren der Ausgaben (S33) an mindestens einen Aktuator (151,152,153,154) und das Nicht-Stoppen des Abspielens (S31) einer Musik oder eines Videos oder eines Spiels beinhaltet.

10. Elektrisches Fahrzeug (100) nach Anspruch 9, wobei der mindestens eine Umgebungssensor (150) eine Kamera oder ein Lidar- oder Ultraschallsensor oder Bewegungssensor ist.

11. Elektrisches Fahrzeug (100) nach Anspruch 9, das ferner einen Video- und/oder Tonabspieler und/oder eine Fahrzeugschnittstelle zum Spielen umfasst und die Normalbetriebsarbeitsweise (S30) ein Abspielen (S31) einer Musik und/oder eines Videos oder Spiels beinhaltet.

12. Elektrisches Fahrzeug (100) nach Anspruch 10, wobei das elektrische Fahrzeug (100) ein aktives Aufhängungssystem umfasst und die Normalbetriebsarbeitsweise (S30) ein Senden von Ausgaben (S33) an mindestens einen Aktuator (151, 152, 153, 154) des aktiven Aufhängungssystems zum Erzeugen von Kräften auf den mindestens einen Insassen beinhaltet, wobei die Kräfte mit der Musik und/oder dem Video oder Spiel und/oder Eingaben von dem mindestens einen Antriebsbefehl assoziiert sind.

13. Computerprogrammprodukt, das Anweisungen umfasst, die, wenn das Computerprogramm durch einen Computer ausgeführt wird, den Computer veranlassen, das Verfahren nach einem der Ansprüche 1 bis 8 in Verbindung mit einem Fahrzeug nach einem der Ansprüche 9 bis 12 auszuführen.

## Revendications

1. Procédé (S1) de fonctionnement d'un véhicule électrique (100) pendant que le véhicule électrique (100) est à l'arrêt, le procédé (S1) comprenant les opérations suivantes :
déterminer (S10, S11) si le véhicule électrique (100) est à l'arrêt,
déterminer (S12) si au moins un passager est à l'intérieur du véhicule électrique (100),
déterminer (S17, S18) si des exigences de sécurité prédéterminées sont satisfaites,
et autoriser (S13) une commande de démarrage d'une fonction de fonctionnement à l'arrêt (S20) si le véhicule électrique (100) est à l'arrêt et si au moins un passager se trouve à l'intérieur du véhicule électrique (100), la fonction de fonctionnement à l'arrêt (S20) comprenant une procédure de fonctionnement normal (S30) et une procédure de sécurité (S40),
activer (S14) la fonction de fonctionnement à l'arrêt (S20) sur déclenchement (S16) de la commande de démarrage par un utilisateur du véhicule électrique (100),
la procédure de sécurité (S40) comprenant les opérations suivantes :
activer (S42) au moins un capteur d'environnement (150) du véhicule électrique (100) pour vérifier si une entité est présente dans un environnement entourant le véhicule électrique (100),
modifier (S50, S50a) au moins une partie de la procédure de fonctionnement normal (S30) si une entité est détectée à une distance prédéfinie du véhicule électrique (100) pendant une durée supérieure à un seuil de temps prédéfini,
le véhicule électrique (100) comprenant un lecteur vidéo et/ou sonore et la procédure de fonctionnement normal (S30) comprenant la lecture (S31) d'une musique ou d'un vidéo ou d'un jeu,
l'étape de modification (S50) comprenant la modification des sorties (S33) vers au moins un actionneur (151, 152, 153, 154) et le fait de ne pas arrêter (S31) la lecture d'une musique, d'une vidéo ou d'un jeu.

2. Procédé selon la revendication 1, dans lequel la détermination (S17, S18) du fait que des exigences de sécurité prédéterminées sont ou non satisfaites comprend la détection du fait que des portes du véhicule électrique (100) sont fermées et/ou la vérification du fait que l'au moins un passager utilise une ceinture de sécurité, et/ou la vérification de l'identité de l'au moins un passager.

3. Procédé selon la revendication 1 ou 2, dans lequel au moins une partie de la procédure de fonctionnement normal (S30) est modifiée si une entité est détectée ayant des dimensions supérieures à un seuil de dimension prédéfini.

4. Procédé (S1) selon l'une quelconque des revendications précédentes, dans lequel la procédure de sécurité (S40) comprend la mise en pause (S48) d'au moins une partie de la procédure de fonctionnement normal (S30) si l'entité ayant des dimensions supérieures à un seuil de dimension prédéfini est détectée à la distance prédéfinie du véhicule électrique (100) et la reprise de ladite partie de la procédure de fonctionnement normal (S30) si l'entité est détectée pendant une durée inférieure au seuil de temps prédéfini.

5. Procédé (S1) selon l'une quelconque des revendications précédentes, dans lequel la procédure de fonctionnement normal (S30) comprend la réception d'entrées (S32) en provenance d'au moins une commande de conduite du véhicule électrique (100).

6. Procédé (S1) selon l'une quelconque des revendications précédentes 1 à 5, dans lequel le véhicule électrique (100) comprend un système de suspensions actives et la procédure de fonctionnement normal (S30) comprend l'envoi de sorties (S33) à au moins un actionneur (151, 152, 153, 154) du système de suspensions actives pour générer des forces sur au moins un passager, lesdites forces étant associées à la musique et/ou à la vidéo et/ou au jeu à partir de l'au moins une commande de conduite.

7. Procédé (S1) selon l'une quelconque des revendications précédentes, le procédé comprenant la fourniture (S15) d'une rétroaction visuelle et/ou acoustique indiquant que la fonction de fonctionnement à l'arrêt est active et/ou pour transmettre des informations telles que des avertissements au passager utilisateur.

8. Procédé (S1) selon l'une quelconque des revendications précédentes, dans lequel la procédure de sécurité (S40) comprend la fourniture (S51) d'un avertissement visuel et/ou sonore après l'arrêt (S50) de la fonction de fonctionnement à l'arrêt (S20).

9. Véhicule électrique (100) comprenant au moins un capteur d'environnement (150) pour détecter un environnement entourant le véhicule électrique (100), un processeur, une mémoire, et un produit programme d'ordinateur stocké dans la mémoire et comprenant des instructions qui, lorsque le programme d'ordinateur est exécuté par le processeur, amènent le processeur à exécuter des opérations, de préférence des opérations selon le procédé de l'une quelconque des revendications 1 à 7, les opérations comportant :
déterminer (S10, S11) si le véhicule électrique (100) est à l'arrêt,
déterminer (S12) si au moins un passager est à l'intérieur du véhicule électrique (100),
déterminer (S17, S18) si des exigences de sécurité prédéterminées sont satisfaites,
activer (S13) une commande de démarrage d'une fonction de fonctionnement à l'arrêt (S20) si le véhicule électrique (100) est à l'arrêt et si au moins un passager se trouve à l'intérieur du véhicule électrique (100), la fonction de fonctionnement à l'arrêt (S20) comportant une procédure de fonctionnement normal (S30) et une procédure de sécurité (S40),
activer (S14) la fonction de fonctionnement à l'arrêt (S20) sur déclenchement (S16) de la commande de démarrage par un utilisateur du véhicule électrique (100),
la procédure de sécurité (S40) comprenant les opérations suivantes :
activer (S42) l'au moins un capteur d'environnement (150) du véhicule électrique (100) pour vérifier si une entité est présente dans un environnement entourant le véhicule électrique (100),
modifier (S50, S50a) au moins une partie de la procédure de fonctionnement normal (S30) si une entité est détectée à une distance prédéfinie du véhicule électrique (100) pendant une durée supérieure à un seuil de temps prédéfini
le véhicule électrique (100) comprenant un lecteur vidéo et/ou sonore et la procédure de fonctionnement normal (S30) comprenant la lecture (S31) d'une musique ou d'un vidéo ou d'un jeu,
l'étape de modification (S50) comprenant la modification des sorties (S33) vers au moins un actionneur (151, 152, 153, 154) et le fait de ne pas arrêter (S31) la lecture d'une musique, d'une vidéo ou d'un jeu.

10. Véhicule électrique (100) selon la revendication 9, dans lequel l'au moins un capteur d'environnement (150) est l'un quelconque d'une caméra ou d'un capteur Lidar ou ultrasonique ou d'un capteur de mouvement.

11. Véhicule électrique (100) selon la revendication 9, comprenant en outre un lecteur vidéo et/ou sonore et/ou une interface de véhicule pour le jeu et la procédure de fonctionnement normal (S30) comprend la lecture (S31) d'une musique et/ou d'une vidéo ou d'un jeu.

12. Véhicule électrique (100) selon la revendication 10, dans lequel le véhicule électrique (100) comprend un système de suspensions actives et la procédure de fonctionnement normal (S30) comprend l'envoi de sorties (S33) à au moins un actionneur (151, 152, 153, 154) du système de suspensions actives pour générer des forces sur l'au moins un passager, lesdites forces étant associées à la musique et/ou à la vidéo ou au jeu et/ou aux entrées provenant de l'au moins une commande de conduite.

13. Produit de programme informatique comprenant des instructions qui, lorsque le programme informatique est exécuté par un ordinateur, amènent l'ordinateur à exécuter le procédé selon l'une quelconque des revendications 1 à 8 en liaison avec un véhicule selon l'une quelconque des revendications 9 à 12.
